# EUROPÄISCHE PATENTSCHRIFT

(11) **EP 3 265 701 B1**
(45) Veröffentlichungstag und Bekanntmachung des Hinweises auf die Patenterteilung: **01.05.2019**
(21) Anmeldenummer: 16708624.8
(22) Anmeldetag: 25.02.2016
(51) Int. Cl.: F16H 61/662, F16H 63/06, F16H 55/56

(54) **CVT-GETRIEBE MIT VERBESSERTER STEUERBARKEIT UND REGELUNGSVERFAHREN DAFÜR**
CVT GEARBOX WITH IMPROVED CONTROLLABILITY AND A METHOD FOR CONTROLLING SAID GEARBOX
TRANSMISSION À VARIATION CONTINUE À COMMANDE AMÉLIORÉE ET PROCÉDÉ DE RÉGLAGE POUR LADITE TRANSMISSION

(30) Priorität: 05.03.2015 DE 102015203902
(43) Veröffentlichungstag der Anmeldung: 10.01.2018
(73) Patentinhaber: Robert Bosch GmbH, 70442 Stuttgart (DE)
(72) Erfinder: KLYMENKO, Mykhaylo, 70839 Gerlingen (DE)
(86) Internationale Anmeldenummer: PCT/EP2016/053927
(87) Internationale Veröffentlichungsnummer: WO 2016/139112

(56) Entgegenhaltungen:
- EP-A1- 2 784 357
- JP-A- 2004 278 725
- US-A1- 2011 277 577

## Beschreibung

### Stand der Technik

Die vorliegende Erfindung betrifft ein CVT-Getriebe (stufenlos verstellbares Getriebe) mit einer deutlich verbesserten Steuerbarkeit und Regelbarkeit sowie ein Verfahren zum Ansteuern eines CVT-Getriebes.

CVT-Getriebe sind aus dem Stand der Technik in unterschiedlichen Ausgestaltungen bekannt. Aufgrund des kontinuierlich variablen Getriebes können bei Fahrzeugen jeweils geeignete Übersetzungsverhältnisse im Vergleich mit Getrieben mit festgelegten Gängen erreicht werden. Ein besonderes Anwendungsgebiet derartiger CVT-Getriebe sind Kleinfahrzeuge, wie beispielsweise Zweiräder, Dreiräder, sog. Tuk-Tuks, Schneemobile, Quads oder Scooter. Bei derartigen CVT-Getrieben werden häufig Fliehkraftregler zur Verstellung einer Position eines Riemens an einem Kegelscheibenpaar verwendet. Abhängig von der Drehzahl verlagern Fliehkraftgewichte des Fliehkraftreglers dabei ihre radiale Position, wodurch ein axialer Abstand zwischen zwei Kegelscheiben verändert wird und dadurch eine Übersetzung des Getriebes verändert wird. Ein Nachteil derartiger Anordnungen ist es jedoch, dass kein gesteuerter bzw. geregelter Eingriff in die Getriebeübersetzung des CVT-Getriebes möglich ist. Dadurch werden die CVT-Getriebe mit Fliehkraftregler im Stand der Technik üblicherweise nicht an einem optimalen Punkt betrieben, so dass Kraftstoffverbrauch und/oder Emissionen des Fahrzeugs verschlechtert sind. Es wäre daher wünschenswert, dieses Potential bei fliehkraftgeregelten CVT-Getrieben zu nutzen und eine Möglichkeit einer Kraftstoffreduzierung und einer Emissionsreduzierung zu erhalten. Ferner weisen fliehkraftgeregelte CVT-Getriebe auch hinsichtlich einer Fahrzeugdynamik keine optimale Ausgestaltung auf. Insbesondere bei einer Beschleunigung des Fahrzeugs aus dem Stand und bei einer Beschleunigung des Fahrzeugs während einer Fahrt, z.B. einer Elastizität ausgehend von einer ersten Geschwindigkeit auf eine zweite Geschwindigkeit, bestehen aufgrund des nicht optimal gewählten Übersetzungsverhältnisses des fliehkraftgeregelten CVT-Getriebes noch erhebliches Verbesserungspotential.

CVT-Getriebe aus dem Stand der Technik sind in der gattungsgemäßen EP 2 784 357 A1, der JP 2004 278725 A und der US 2011/277577 A1 gezeigt.

### Offenbarung der Erfindung

Das erfindungsgemäße CVT-Getriebe mit den Merkmalen des Anspruchs 1 weist demgegenüber den Vorteil auf, dass ein Emissionsverhalten und ein Kraftstoffverbrauch eines Fahrzeugs signifikant verbessert werden kann. Ferner werden auch deutlich bessere Fahrleistungen, insbesondere bei der Fahrdynamik hinsichtlich einer Beschleunigung aus dem Stand und hinsichtlich einer Beschleunigung eines fahrenden Fahrzeugs, erreicht. Dies wird erfindungsgemäß dadurch erreicht, dass das CVT-Getriebe jeweils in einer optimierten Position betrieben werden kann. Erfindungsgemäß umfasst das CVT-Getriebe hierbei ein erstes Kegelscheibenpaar mit einer ortsfesten Kegelscheibe und einer axial beweglichen Kegelscheibe. Ferner ist ein Abtriebselement, insbesondere ein zweites Kegelscheibenpaar, vorgesehen, sowie ein Umschlingungsmittel, welches das erste Kegelscheibenpaar mit dem Abtriebselement verbindet. Erfindungsgemäß ist ferner eine Stelleinrichtung zur Verstellung einer Position der axial beweglichen Kegelscheibe vorgesehen. Eine Steuereinheit ist eingerichtet, die Stelleinrichtung zu betätigen, um eine Position der axial bewegbaren Kegelscheibe zu verändern. Hierdurch wird eine Position eines Umschlingungsmittels des Kegelscheibenpaars verändert, so dass eine Übersetzung des CVT-Getriebes verändert wird. Somit kann erfindungsgemäß ein Eingriff durch die Steuereinheit in ein CVT-Getriebe ermöglicht werden, um das CVT-Getriebe in optimalen Betriebspunkten zu betreiben.

Erfindungsgemäß ist die Steuereinheit eingerichtet, die Stelleinrichtung, basierend auf einer Primärdrehzahl des ersten Kegelscheibenpaars, einer Sekundärdrehzahl des Abtriebselements, einem Motormoment eines Antriebsmotors, insbesondere einer Brennkraftmaschine, und einer Verstellgeschwindigkeit des Stellantriebs anzusteuern. Somit kann erfindungsgemäß mit Hilfe von vier Größen eine Ansteuerung der Stelleinrichtung ermöglicht werden, welche relativ einfach durchführbar ist und insbesondere sehr robust ist.

Die Unteransprüche zeigen bevorzugte Weiterbildungen der Erfindung.

Bevorzugt ist die Steuereinheit eingerichtet, eine Motorsolldrehzahl des Antriebsmotors, basierend auf der Sekundärdrehzahl und des Motormoments des Antriebsmotors sowie eines Lastmoments am Abtriebselement zu berechnen.

Weiter bevorzugt ist die Steuereinheit eingerichtet, das Lastmoment, basierend auf der Primärdrehzahl des ersten Kegelscheibenpaars, der Sekundärdrehzahl des Abtriebselements, einem Motormoment des Antriebsmotors und einer Verstellgeschwindigkeit der Stelleinrichtung zu berechnen.

Gemäß einer weiteren bevorzugten Ausgestaltung der Erfindung umfasst das Getriebe ferner einen PD-Regler. Dem PD-Regler wird eine Motorsolldrehzahl zugeführt, welche mittels der Steuereinheit berechnet wurde, um eine Motordrehzahl zu regeln.

Weiter bevorzugt umfasst die Steuereinheit ein Kennfeld, um eine Verstellgeschwindigkeit der Stelleinrichtung und insbesondere eines Stellantriebs der Stelleinrichtung, wie z.B. eines elektrischen Motors, zu entnehmen.

Weiter bevorzugt ist ein PI-Regler vorgesehen, welcher die Verstellgeschwindigkeit der Stelleinrichtung, basierend auf dem Kennfeldwert, regelt und ein Ausgang des PI-Reglers ist mit dem Stellantrieb verbunden, um entsprechend den Stellantrieb anzutreiben.

Das erfindungsgemäße Getriebe umfasst ferner bevorzugt wenigstens ein Fliehkraftelement, welches beweglich an der axial beweglichen Kegelscheibe angeordnet ist. Ferner ist eine Abstützwand an der axial beweglichen Kegelscheibe vorgesehen, wobei das Fliehkraftelement zwischen der Abstützwand und einer Rückwand der axial beweglichen Kegelscheibe angeordnet ist. Somit kann durch die Fliehkräfte eine rotationsabhängige Position der axial beweglichen Kegelscheibe erreicht werden und mittels der Stelleinrichtung eine Feinpositionierung und somit eine beispielsweise an entsprechend vorhandene Fahrmodi angepasste Übersetzung eingestellt werden. Die Abstützwand ist vorzugsweise mit einer Kurbelwelle verbunden.

Besonders bevorzugt umfasst die Abstützwand eine sich verjüngende Kontaktfläche für einen Kontakt mit dem Fliehkraftelement. Die sich verjüngende Kontaktfläche der Abstützwand ist vorzugsweise konisch ausgebildet. Bei Erhöhung der Drehzahl erhöhen sich die somit die auf das oder die Fliehkraftelemente wirkende Fliehkraft, so dass Fliehkraftelemente radial nach außen bewegt werden. Hierbei laufen sie auf der sich verjüngenden Kontaktfläche der Abstützwand, so dass auch eine Verschiebungskomponente in Axialrichtung zur Bewegung der beweglichen Kegelscheibe in Axialrichtung auftritt.

Weiter bevorzugt ist eine Abtriebswelle des Stellantriebs der Stelleinrichtung parallel zu einer Mittelachse des Kegelscheibenpaars und insbesondere koaxial zur Mittelachse des Kegelscheibenpaars angeordnet. Dadurch kann ein besonders kompakter Aufbau erreicht werden.

Weiter bevorzugt verläuft die Kurbelwelle durch das Kegelscheibenpaar. Dadurch kann ein besonders kompakter Aufbau des CVT-Getriebes und insbesondere auch der Einheit, umfassend das CVT-Getriebe und den Antriebsmotor, erreicht werden.

Weiter bevorzugt ist die ortsfeste Kegelscheibe dabei direkt mit der Kurbelwelle verbunden, so dass in Axialrichtung der Kurbelwelle nur ein minimaler Bauraumbedarf für das CVT-Getriebe notwendig ist.

Ferner betrifft die vorliegende Erfindung ein Fahrzeug, umfassend ein erfindungsgemäßes stufenloses Getriebe. Das Fahrzeug ist vorzugsweise ein Kleinfahrzeug, insbesondere ein Zweirad oder ein Dreirad oder ein Schneemobil oder Quad oder ein Scooter oder dgl.

Ferner betrifft die vorliegende Erfindung ein Verfahren zur Ansteuerung eines CVT-Getriebes mit einem ersten Kegelscheibenpaar mit einer ortsfesten Kegelscheibe und einer axial beweglichen Kegelscheibe, eine mit dem ersten Kegelscheibenpaar mittels eines Umschlingungsmittels verbundenen Abtriebselement, insbesondere einem zweiten Kegelscheibenpaar, einer Stelleinrichtung zur Verstellung der axial beweglichen Kegelscheibe und einer Steuereinheit, wobei die Steuereinheit die Stelleinrichtung ansteuert, um die axiale Verstellung der beweglichen Kegelscheibe relativ zur ortsfesten Kegelscheibe des ersten Kegelscheibenpaars durchzuführen, um eine Übersetzungsänderung des Getriebes zu ermöglichen.

Das erfindungsgemäße Verfahren umfasst die Schritte des Erfassens einer Primärdrehzahl des ersten Kegelscheibenpaars, des Erfassens einer Sekundärdrehzahl des Abtriebselements, des Erfassens eines Motormoments eines Antriebsmotors und das Erfassen einer Verstellgeschwindigkeit der Stelleinrichtung. Basierend auf diesen vier Kenngrößen steuert dann die Steuereinheit die Stelleinrichtung an, um die Verstellung in Axialrichtung der axialbeweglichen Kegelscheibe zu ermöglichen. Vorzugsweise wird ein Lastmoment am Abtrieb und abhängig davon eine Motorsolldrehzahl mittels der Steuereinheit ermittelt, basierend auf der Primärdrehzahl des ersten Kegelscheibenpaars, der Sekundärdrehzahl des Abtriebselements, des Motormoments des Antriebsmotors und der Verstellgeschwindigkeit der Stelleinrichtung.

Vorzugsweise wird mittels eines PD-Reglers die gewünschte Änderung der Motordrehzahl über die Zeit ermittelt, und insbesondere bevorzugt mittels eines Kennfelds eine Verstellgeschwindigkeit der Stelleinrichtung entnommen. Dadurch kann unter Berücksichtigung des Kehrwerts der Abtriebsdrehzahl die gewünschte Änderung der Getriebeübersetzung über die Zeit ermittelt werden.
Weiter bevorzugt wird der entnommene Wert aus dem Kennfeld einem PI-Regler zugeführt, welcher die Verstellgeschwindigkeit der Stelleinrichtung regelt. Weiter bevorzugt wird das erfindungsgemäße Verfahren bei einem CVT-Getriebe mit Fliehkraftelementen durchgeführt, so dass das erfindungsgemäße Verfahren nur eine Feinregelung der Übersetzung des CVT-Getriebes ausführt.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Schnittansicht eines CVT-Getriebes gemäß einem bevorzugten Ausführungsbeispiel der Erfindung,
- Figur 2: eine schematische Blockansicht des Getriebes von Figur 1, und
- Figur 3: eine schematische Blockansicht einer Steuereinheit zur Regelung des Getriebes.

### Bevorzugte Ausführungsform der Erfindung

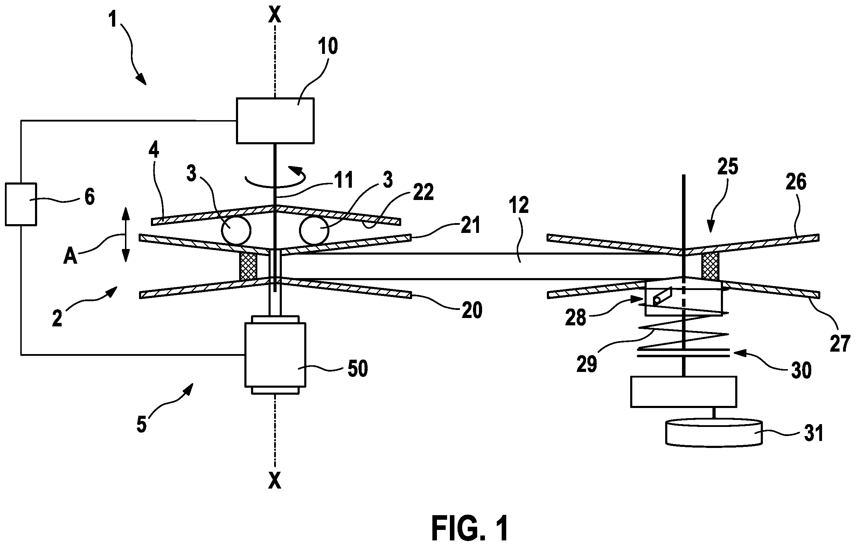

Nachfolgend wird unter Bezugnahme auf die Figuren 1 bis 3 ein CVT-Getriebe 1, d.h., ein kontinuierlich verstellbares, stufenloses Getriebe, gemäß einem Ausführungsbeispiel im Detail beschrieben.

Wie aus Figur 1 ersichtlich ist, umfasst das CVT-Getriebe 1 ein erstes Kegelscheibenpaar 2 mit einer ortsfesten Kegelscheibe 20 und einer axial beweglichen Kegelscheibe 21.

Die ortsfeste Kegelscheibe 20 ist auf einer Kurbelwelle 11 fixiert. Die Kurbelwelle 11 ist, wie in Figur 1 angedeutet, mit einem Antriebsmotor 10, insbesondere einer Brennkraftmaschine verbunden.

Das CVT-Getriebe 1 ist ein fliehkraftgeregeltes Getriebe und umfasst eine Vielzahl von Fliehkraftelementen 3, welche an der axial beweglichen Kegelscheibe 21 angeordnet sind. In diesem Ausführungsbeispiel sind die Fliehkraftelemente Kugeln. Alternativ sind die Fliehkraftelemente Zylinder mit einem Durchgangsloch.

Weiterhin umfasst das CVT-Getriebe 1 eine nicht axial bewegliche Abstützwand 4, welche an der axial beweglichen Kegelscheibe angeordnet ist. Durch die Radialposition der Fliehkraftelemente 3 wird eine Axialposition A in Axialrichtung X-X der axial beweglichen Kegelscheibe 21 bestimmt.

Zur Verstellung der axial beweglichen Kegelscheibe 21 ist erfindungsgemäß eine Stelleinrichtung 5 vorgesehen, welche mit einer Steuereinheit 6 verbunden ist.

Die Stelleinrichtung 5 umfasst einen Stellantrieb 50 und z.B. einen Spindeltrieb, um eine Rotation des Stellmotors in eine Axialbewegung umzuwandeln.

Der Stellantrieb 50 ist vorzugsweise ein elektrischer Motor. Alternativ umfasst die Stelleinrichtung 5 jedoch einen pneumatisch betriebenen Verstellantrieb oder einen hydraulisch betriebenen Verstellantrieb oder einen elektromagnetischen Verstellantrieb.

Ein Umschlingungsmittel 12, z.B. ein Riemen, ist zwischen den beiden Kegelscheiben 20, 21 angeordnet. Das Umschlingungsmittel 12 ist mit einem Abtriebselement 25, das in diesem Ausführungsbeispiel ein zweites Kegelscheibenpaar 26, 27 ist, verbunden. Das Abtriebselement 25 kann aber beispielsweise auch ein direkt angetriebenes Rad oder dgl. sein.

Erfindungsgemäß kann über die Steuereinheit 6 eine Position der beweglichen Kegelscheibe 21 eingestellt werden und dadurch ein axialer Abstand zwischen den beiden Kegelscheiben 20, 21 eingestellt werden, welcher eine gewünschte Übersetzung des CVT-Getriebes bereitstellt.

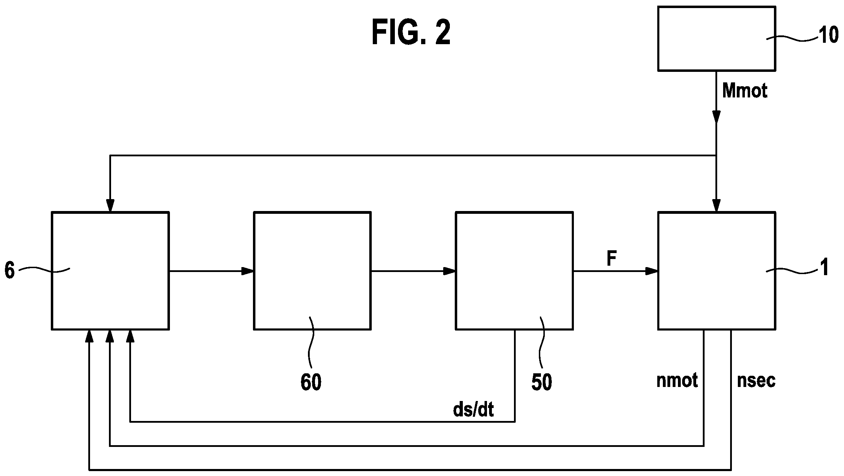

Wie aus Figur 2 ersichtlich ist, ist die Steuereinheit 6 eingerichtet, eine Ansteuerung der Stelleinrichtung 5, genauer des Stellantriebs 50, basierend auf einer Primärdrehzahl nmot des ersten Kegelscheibenpaars 2, einer Sekundärdrehzahl nsec des Abtriebselements 25, einem Motormoment Mmot des Antriebsmotors 10 und einer Verstellgeschwindigkeit ds/dt der Stelleinrichtung 5 anzusteuern. Die Steuereinheit 6 steuert den Stellantrieb 50 dabei über eine Endstufe 60 an und der Stellantrieb 50 übt eine Verstellkraft F auf das CVT-Getriebe 1 aus. Somit kann die Steuereinheit 6, basierend auf den vier genannten Größen, eine Steuerung des CVT-Getriebes 1 vornehmen.

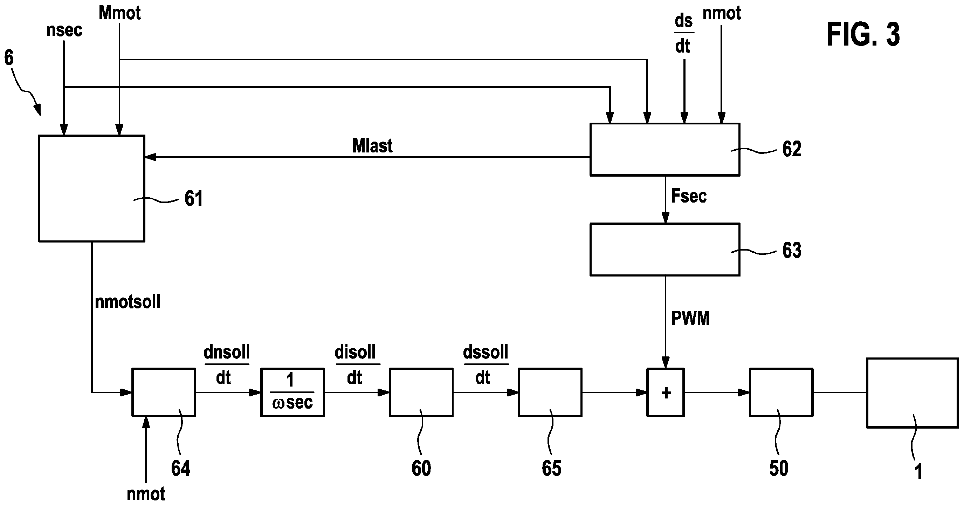

Die Steuereinheit 6 ist im Detail in Figur 3 dargestellt. Wie aus Figur 3 ersichtlich ist, werden die vier Größen Primärdrehzahl nmot, Sekundärdrehzahl nsec, Motormoment Mmot und Verstellgeschwindigkeit ds/dt einer Abschätzeinheit 62 zugeführt, welche ein Lastmoment Mlast abschätzt. Weiterhin schätzt die Abschätzeinheit 62 auch eine sekundäre Anpresskraft Fsec am Abtriebselement 25.

Wie weiter aus Figur 3 ersichtlich ist, berechnet eine erste Berechnungseinheit 61 aus der Sekundärdrehzahl nsec, dem Motormoment Mmot und dem Lastmoment Mlast eine Motorsolldrehzahl nmotsoll. Diese wird mit der tatsächlichen Motordrehzahl nmot verglichen und über einen PD-Regler 64 in eine gewünschte Verstellgeschwindigkeit pro Zeit disoll/dt des Übersetzungsverhältnisses transformiert. Da das Übersetzungsverhältnis des CVT-Getriebes 1 nicht linear von der Position der axial beweglichen Kegelscheibe 21 abhängig ist, wird eine Sollgeschwindigkeit des Stellantriebs 50 aus einem Kennfeld 60 ermittelt. Die Verstellgeschwindigkeit des Stellantriebs 50 wird dann mittels eines PI-Reglers 65 gemeinsam mit einem Wert, welcher aus einer zweiten Berechnungseinheit 63, die die abgeschätzte Anpresskraft Fsec aus der Abschätzeinheit 62 mittels Pulsweitenmodulation PWM berechnet, dem Stellantrieb 50 als Stellsignal zugeführt.

Die zweite Berechnungseinheit 63 berechnet die Vorsteuerung dabei ebenfalls auf Basis eines Kennfelds 60. Dieses Kennfeld definiert die notwendigen Akturierungskräfte auf der Primärseite des CVT-Getriebes, d.h., des ersten Kegelscheibenpaars 2, abhängig von den Anpresskräften auf der Sekundärseite. Dabei wird eine Kraft auf der Sekundärseite durch eine Steigung einer Schrägschlitz-Stift-Anordnung und ein entsprechendes Moment bestimmt. Die Schrägschlitz-Stift-Anordnung umfasst dabei einen Zylinder, in welchem ein schräger Schlitz in einem vorbestimmten Winkel zu einer Mittelachse des Zylinders am Mantelbereich des Zylinders vorgesehen ist, wobei ein Stift in den Schlitz vorragt (Momentrampe bzw. Torque Cam).

Zur Unterstützung der Anpresskraft am Abtriebselement 25 ist ferner ein Federelement 29 vorgesehen. Über eine Fliehkraftkupplung 30 wird dann eine Endübersetzung zu einem Rad 31 oder dgl. übertragen.

Zur Vereinfachung des Modells können dabei bevorzugt bestimmte Werte, beispielsweise ein Wirkungsgrad des CVT-Getriebes, wie auch dynamische Effekte bei einer schnellen Verstellung, z.B. die Trägheit des Verbrennungsmotors, nicht berücksichtigt werden. Auch kann beispielsweise eine Reibung an der Schrägschlitz-Stift-Anordnung 28 im Modell nicht berücksichtigt werden.

Somit kann erfindungsgemäß eine Feineinstellung einer Übersetzung, welche grundsätzlich durch die Fliehkraftelemente 3 vorgegeben ist, realisiert werden. Erfindungsgemäß kann in Abhängigkeit von Kenngrößen, beispielsweise die Drehzahl und/oder das Drehmoment des Antriebsmotors 10 eine optimierte Getriebeübersetzung realisiert werden. Die Getriebeübersetzung kann dabei hinsichtlich einer Verbrauchsoptimierung oder einer Emissionsoptimierung oder einer Optimierung einer Beschleunigung des Fahrzeugs, gewählt werden. Auch kann eine beliebige Kombination von zu optimierenden Ausgangsgrößen gewählt werden und entsprechend eine hierfür optimale Getriebeübersetzung des CVT-Getriebes eingestellt werden.

Versuche mit einem erfindungsgemäßen CVT-Getriebe 1 haben dabei ergeben, dass eine Verbrauchseinsparung von Kraftstoff im Bereich von 10% möglich ist, eine verbesserte Beschleunigung in einem Bereich zwischen 0 bis 60 km/h von bis zu 17% möglich ist und eine verbesserte Elastizität einer Beschleunigung in einem Bereich zwischen 20 bis 50 km/h von 19% im Vergleich mit einem normalen fliehkraftgeregelten CVT-Getriebe möglich sind. Zwar erfordert das erfindungsgemäße CVT-Getriebe durch die Stelleinrichtung einen etwas größeren mechanischen und elektrischen Aufbau, dieser kann allerdings durch die dargelegten Verbesserungen und Einsparungen mehr als wett gemacht werden.

## Patentansprüche

1. CVT-Getriebe, umfassend:
- ein erstes Kegelscheibenpaar (2) mit einer ortsfesten Kegelscheibe (20) und einer axial beweglichen Kegelscheibe (21),
- ein Abtriebselement (25),
- ein Umschlingungsmittel (12), welches das erste Kegelscheibenpaar (2) mit dem Abtriebselement (25) verbindet,
- eine Stelleinrichtung (5) zur Verstellung der axial beweglichen Kegelscheibe (21), mittels eines Stellantriebs (50), und
- eine Steuereinheit (6), welche eingerichtet ist, die Stelleinrichtung (5) ansteuern, um eine Verstellung der axial beweglichen Kegelscheibe (21) zu erreichen, **dadurch gekennzeichnet, dass** die Steuereinheit (6) eingerichtet ist, die Stelleinrichtung (5), basierend auf einer Primärdrehzahl (nmot) des ersten Kegelscheibenpaars (2), einer Sekundärdrehzahl (nsec) des Abtriebselements (25), einem Motormoment (Mmot) eines Antriebsmotors (10) und einer Verstellgeschwindigkeit (ds/dt) der Stelleinrichtung (5) anzusteuern.

2. Getriebe nach Anspruch 1, **dadurch gekennzeichnet, dass** die Steuereinheit (6) eingerichtet ist, eine Motorsolldrehzahl (nmotsoll), basierend auf der Sekundärdrehzahl (nsec) des Abtriebselements (25), des Motormoments (Mmot) des Antriebsmotors (10) und eines Lastmoments (Mlast) am Abtriebselement (25) zu berechnen.

3. Getriebe nach Anspruch 2, **dadurch gekennzeichnet, dass** die Steuereinheit (6) eingerichtet ist, das Lastmoment (Mlast) basierend auf der Primärdrehzahl (nmot) des ersten Kegelscheibenpaars (2), der Sekundärdrehzahl (nsec) des Abtriebselements (25), dem Motormoment (Mmot) des Antriebsmotors (10) und der Verstellgeschwindigkeit (ds/dt) der Stelleinrichtung (5) zu berechnen.

4. Getriebe nach einem der vorhergehenden Ansprüche, ferner umfassend einen PD-Regler (64), welcher eine gewünschte Änderung der Primärdrehzahl über die Zeit ermittelt.

5. Getriebe nach einem der vorhergehenden Ansprüche, ferner umfassend ein Kennfeld (60), um die Verstellgeschwindigkeit der Stelleinrichtung (5) zu bestimmen.

6. Getriebe nach Anspruch 5, ferner umfassend ein PI-Regler, welcher die Verstellgeschwindigkeit der Stelleinrichtung (5), basierend auf dem entnommenen Wert aus dem Kennfeld regelt.

7. Getriebe nach einem der vorhergehenden Ansprüche, ferner umfassend wenigstens ein Fliehkraftelement (3) am ersten Kegelscheibenpaar (2).

8. Verfahren zur Ansteuerung eines CVT-Getriebes (1) mit einem ersten Kegelscheibenpaar (2) mit einer ortsfesten Kegelscheibe (20) und einer axial beweglichen Kegelscheibe (21), einem Abtriebselement (25), einem Umschlingungsmittel (12), welches das erste Kegelscheibenpaar (2) mit dem Abtriebselement (25) verbindet, eine Stelleinrichtung (5) zur Verstellung der axial beweglichen Kegelscheibe (21) mittels eines Stellantriebs (50) und einer Steuereinheit (6) zum Ansteuern der Stelleinrichtung (5), wobei die Steuereinheit (6) die Stelleinrichtung (5) zur Verstellung der axial beweglichen Kegelscheibe (21) ansteuert, **dadurch gekennzeichnet, dass** die Steuereinheit (6) die Stelleinrichtung (5), basierend auf einer Primärdrehzahl (nmot) des ersten Kegelscheibenpaars (2), einer Sekundärdrehzahl (nsec) des Abtriebselements (25), einem Motormoment (Mmot) eines Antriebsmotors (10) und einer Verstellgeschwindigkeit (ds/dt) der Stelleinrichtung (5) ansteuert.

9. Verfahren nach Anspruch 8, **dadurch gekennzeichnet, dass** ein Lastmoment (Mlast) und eine Motorsolldrehzahl (nmotsoll), basierend auf der Primärdrehzahl (nmot) des ersten Kegelscheibenpaars (2), der Sekundärdrehzahl (nsec) des Abtriebselements (25), dem Motormoment (Mmot) des Antriebsmotors (10) und der Verstellgeschwindigkeit (ds/dt) der Stelleinrichtung (5) berechnet wird.

10. Verfahren nach Anspruch 9, **dadurch gekennzeichnet, dass** ein PD-Regler (64) den Stellantrieb, basierend auf der Primärdrehzahl (nmot) und der Motorsolldrehzahl (nmotsoll), regelt.

11. Verfahren nach einem der Ansprüche 8 bis 10, **dadurch gekennzeichnet, dass** die Verstellgeschwindigkeit des Stellantriebs (50) aus einem vorgegebenen Kennfeld (60) entnommen wird.

12. Verfahren nach Anspruch 11, **dadurch gekennzeichnet, dass** die Verstellgeschwindigkeit des Stellantriebs (50) mittels des aus dem Kennfeld entnommenen Wertes mittels eines PI-Reglers (65) geregelt wird.

13. Verfahren nach einem der Ansprüche 8 bis 12, **dadurch gekennzeichnet, dass** das CVT-Getriebe (1) wenigstens ein Fliehkraftelement (3) umfasst und mittels des Verfahrens eine Feinregelung der Übersetzung des CVT-Getriebes ausgeführt wird.

14. Fahrzeug, umfassend ein CVT-Getriebe (1), nach einem der Ansprüche 1 bis 7.

## Claims

1. CVT gearbox comprising:
- a first cap V-pulley pair (2) with a positionally fixed V-pulley (20) and an axially movable V-pulley (21),
- an output element (25),
- a wrap-around means (12), which connects the first V-pulley pair (2) to the output element (25),
- an actuating device (5) for adjusting the axially movable V-pulley (21), by means of an actuator drive (50), and
- a control unit (6) which is configured to actuate the actuating means (5) in order to bring about adjustment of the axially movable V-pulley (21), **characterized in that** the control unit (6) is configured to actuate the actuating device (5) on the basis of a primary rotational speed (nmot) of the first V-pulley pair (2), a secondary rotational speed (nsec) of the output element (25), an engine torque (Mmot) of a drive engine (10) and an adjustment speed (ds/dt) of the actuating device (5).

2. Gearbox according to Claim 1, **characterized in that** the control unit (6) is configured to calculate an engine setpoint rotational speed (nmotsoll) on the basis of the secondary rotational speed (nsec) of the output element (25), of the engine torque (Mmot) of the drive engine (10) and a load torque (Mlast) at the output element (25).

3. Gearbox according to Claim 2, **characterized in that** the control unit (6) is configured to calculate the load torque (Mlast) on the basis of the primary rotational speed (nmot) of the first V-pulley pair (2), of the secondary rotational speed (nsec) of the output element (25), of the engine torque (Mmot) of the drive engine (10) and the adjustment speed (ds/dt) of the actuating device (5).

4. Gearbox according to one of the preceding claims, also comprising a PD controller (64) which determines a desired change in the primary rotational speed over time.

5. Gearbox according to one of the preceding claims, also comprising a characteristic diagram (60) for determining the adjustment speed of the actuating device (5).

6. Gearbox according to Claim 5, also comprising a PI controller which controls the adjustment speed of the actuating device (5) on the basis of the value obtained from the characteristic diagram.

7. Gearbox according to one of the preceding claims, also comprising at least one centrifugal force element (3) on the first V-pulley pair (2).

8. Method for actuating a CVT gearbox (1) having a first V-pulley pair (2) with a positionally fixed V-pulley (20) and an axially movable V-pulley (21), an output element (25), a wrap-around means (12) which connects the first V-pulley pair (2) to the output element (25), an actuating device (5) for adjusting the axially movable V-pulley (21) by means of an actuator drive (50), and a control unit (6) for actuating the actuating device (5), wherein the control unit (6) actuates the actuating device (5) in order to adjust the axially movable V-pulley (21), **characterized in that** the control unit (6) actuates the actuating device (5) on the basis of a primary rotational speed (nmot) of the first V-pulley pair (2), a secondary rotational speed (nsec) of the output element (25), an engine torque (Mmot) of a drive engine (10) and an adjustment speed (ds/dt) of the actuating device (5).

9. Method according to Claim 8, **characterized in that** a load torque (Mlast) and an engine setpoint rotational speed (nmotsoll) on the basis of the primary rotational speed (nmot) of the first V-pulley pair (2), of the secondary rotational speed (nsec) of the output element (25), of the engine torque (Mmot) of the drive engine (10) and the adjustment speed (ds/dt) of the actuating device (5) .

10. Method according to Claim 9, **characterized in that** a PD controller (64) controls the actuator drive on the basis of the primary rotational speed (nmot) and the engine setpoint rotational speed (nmotsoll).

11. Method according to one of Claims 8 to 10, **characterized in that** the adjustment speed of the actuator drive (50) is obtained from a predefined characteristic diagram (60).

12. Method according to Claim 11, **characterized in that** the adjustment speed of the actuator drive (50) is controlled by means of a PI controller (65), by means of the value obtained from the characteristic diagram.

13. Method according to one of Claims 8 to 12, **characterized in that** the CVT gearbox (1) comprises at least one centrifugal force element (3), and fine control of the transmission ratio of the CVT gearbox is carried out by means of the method.

14. Vehicle comprising a CVT gearbox (1) according to one of Claims 1 to 7.

## Revendications

1. Transmission à variation continue, comprenant:
- une première paire de disques coniques (2) avec un disque conique stationnaire (20) et un disque conique mobile axialement (21),
- un élément de sortie (25),
- un moyen d'enroulement (12), qui relie la première paire de disques coniques (2) à l'élément de sortie (25),
- un dispositif de réglage (5) pour le déplacement du disque conique mobile axialement (21) au moyen d'un servomoteur (50), et
- une unité de commande (6), qui est configurée pour commander le dispositif de réglage (5), afin d'atteindre un déplacement du disque conique mobile axialement (21),
**caractérisée en ce que** l'unité de commande (6) est configurée pour commander le dispositif de réglage (5) en se basant sur un nombre de tours primaire (nmot) de la première paire de disques coniques (2), un nombre de tours secondaire (nsec) de l'élément de sortie (25), un couple de moteur (Mmot) d'un moteur d'entraînement (10) et une vitesse de déplacement (ds/dt) du dispositif de réglage (5).

2. Transmission selon la revendication 1, **caractérisée en ce que** l'unité de commande (6) est configurée pour calculer un nombre de tours de consigne du moteur (nmotsoll), en se basant sur le nombre de tours secondaire (nsec) de l'élément de sortie (25), le couple de moteur (Mmot) du moteur d'entraînement (10) et un couple de charge (Mlast) à l'élément de sortie (25).

3. Transmission selon la revendication 2, **caractérisée en ce que** l'unité de commande (6) est configurée pour calculer le couple de charge (Mlast) en se basant sur le nombre de tours primaire (nmot) de la première paire de disques coniques (2), le nombre de tours secondaire (nsec) de l'élément de sortie (25), le couple de moteur (Mmot) du moteur d'entraînement (10) et la vitesse de déplacement (ds/dt) du dispositif de réglage (5).

4. Transmission selon l'une quelconque des revendications précédentes, comprenant en outre un régulateur PD (64), qui détermine une variation souhaitée du nombre de tours primaire au cours du temps.

5. Transmission selon l'une quelconque des revendications précédentes, comprenant en outre un diagramme caractéristique (60), afin de déterminer la vitesse de déplacement du dispositif de réglage (5).

6. Transmission selon la revendication 5, comprenant en outre un régulateur PI, qui régule la vitesse de déplacement du dispositif de réglage (5), en se basant sur la valeur prélevée dans le diagramme caractéristique.

7. Transmission selon l'une quelconque des revendications précédentes, comprenant en outre au moins un élément centrifuge (3) sur la première paire de disques coniques (2).

8. Procédé de commande d'une transmission à variation continue (1) avec une première paire de disques coniques (2) avec un disque conique stationnaire (20) et un disque conique mobile axialement (21), un élément de sortie (25), un moyen d'enroulement (12), qui relie la première paire de disques coniques (2) à l'élément de sortie (25), un dispositif de réglage (5) pour le déplacement du disque conique mobile axialement (21) au moyen d'un servomoteur (50) et une unité de commande (6) pour commander le dispositif de réglage (5), dans lequel l'unité de commande (6) commande le dispositif de réglage (5) pour le déplacement du disque conique mobile axialement (21), **caractérisé en ce que** l'unité de commande (6) commande le dispositif de réglage (5) en se basant sur un nombre de tours primaire (nmot) de la première paire de disques coniques (2), un nombre de tours secondaire (nsec) de l'élément de sortie (25), un couple de moteur (Mmot) du moteur d'entraînement (10) et une vitesse de déplacement (ds/dt) du dispositif de réglage (5).

9. Procédé selon la revendication 8, **caractérisé en ce que** l'on calcule un couple de charge (Mlast) et un nombre de tours de consigne du moteur (nmotsoll), en se basant sur le nombre de tours primaire (nmot) de la première paire de disques coniques (2), le nombre de tours secondaire (nsec) de l'élément de sortie (25), le couple de moteur (Mmot) du moteur d'entraînement (10) et la vitesse de déplacement (ds/dt) du dispositif de réglage (5).

10. Procédé selon la revendication 9, **caractérisé en ce qu'**un régulateur PD (64) régule le servomoteur, en se basant sur le nombre de tours primaire (nmot) et le nombre tours de consigne du moteur (nmotsoll).

11. Procédé selon l'une quelconque des revendications 8 à 10, **caractérisé en ce que** l'on prélève la vitesse de déplacement du servomoteur (50) dans un diagramme caractéristique prédéterminé (60).

12. Procédé selon la revendication 11, **caractérisé en ce que** l'on régule la vitesse de déplacement du servomoteur (50) au moyen d'un régulateur PI (65) au moyen de la valeur prélevée dans le diagramme caractéristique.

13. Procédé selon l'une quelconque des revendications 8 à 12, **caractérisé en ce que** la transmission à variation continue (1) comprend au moins un élément centrifuge (3) et on effectue au moyen du procédé une régulation fine du rapport de transmission de la transmission à variation continue.

14. Véhicule, comprenant une transmission à variation continue (1) selon l'une quelconque des revendications 1 à 7.
